# EUROPEAN PATENT APPLICATION

(11) **EP 3 613 566 A1**
(43) Date of publication of application: **26.02.2020**
(21) Application number: 18788607.2
(22) Date of filing: 03.04.2018
(51) Int. Cl.: B29C 70/00, B29C 70/02, B29C 70/58, B29C 70/60, B29C 47/06, B32B 5/22, B32B 5/24, B32B 5/30, B32B 27/08, B32B 27/14, B32B 27/18, B32B 27/36, B29B 17/00, B29D 7/01, C08J 5/18, C08J 11/00, C08J 11/04, C08J 11/06

(54) **ECOLOGICAL MINERAL PAPER MADE OF RECYCLED PLASTIC AND METHOD FOR PRODUCING SAME**

(30) Priority: 20.04.2017 MX 2017005123
(71) Applicant: Industrias Sustentables Nava, S.A.P.I. de C.V., Metepec, Estado de México 52148 (MX)
(72) Inventor: SHASTRI, Ranganath K., 52148 Metepec, Estado de México (MX); NAVA MARTÍNEZ, Eder Adrián, 55070 Ecatepec, Estado de México (MX); CABALLERO GUTIÉRREZ, Paulina Mariana, 08900 Iztacalco, Ciudad de México (MX); ORTIZ GUTIÉRREZ, Isaí Javier, 08500 Iztacalco, Ciudad de México (MX); PÉREZ VALDÉS, Carlos Armando, 09730 Iztapalapa, Ciudad de México (MX)
(74) Representative: Heinze, Ekkehard
(86) International application number: PCT/IB2018/052302
(87) International publication number: WO 2018/193329

(57) **Abstract**

A synthetic mineral paper as substitute to cellulosic paper and a process for producing the same are provided.

## Description

### FIELD OF THE INVENTION

The present invention relates to the field of recycled materials for environmental care. Specifically, the present invention relates to a synthetic mineral paper made from recycled plastics.

### BACKGROUND OF THE INVENTION

A mineral paper or stone paper differs from the conventional cellulosic paper and differs as it incorporates a high mineral content, where the minerals are typically CaCO₃, Talc, Silica, etc.

In most cases, they are based on a polymer matrix, generally virgin polyolefin resins such as PE or PP.

Patent application WO 2014/169454 A1 by Hong Kong Green Angel Technology Ltd. describes a coextruded structure with 2 or 3 PVC-based layers, consisting of surface layer(s) of a resin mixture and TiO₂, with the central layer making up 90% of the thickness, made of a resin mixture with CaCO₃, intended for use as sheet paper for furniture.

Patent application WO 2014/169448 A1 by Hong Kong Green Angel Technology Ltd. relates to a ecologic stone paper in the form of a coextruded structure of 3 base layers of polyolefin resins (LDPE, HDPE, LLDPE or PP) which consists of surface layer (s) of a resin mixture and TiO₂ while the central layer that makes up 90% of the thickness, is made of a resin mixture with fibers having a length of 10-15 mm and to the process for the production thereof.

US patent application 2014/0135423 A1 by Real Green Material Technology Corporation of Taiwan refers to an eco-friendly writing stone paper free of CaCO₃, made by extrusion of pellets produced from a mixture of stone dust, silica powder in the size range of 10⁻⁶ to 10⁻⁹ m and polyolefin resin (PE and PP) and the process to produce the same, as well as the surface treatment to obtain good ink absorption.

US Patent 7,938,933 B2 assigned to the Atomic Energy Council - Institute of Nuclear Energy Research of Taiwn, describes the process of making a refractory mineral fiber paper using a wet papermaking machine by mixing a solution of 30 to 50% refractory mineral fiber and PVA resin with a solution of 50 to 70% polyethylene fiber and PVA resin.

Patent application WO 2013/185392 A1 describes the process for making a stone paper that is oriented in the longitudinal direction 2-7 times to align the stone dust in one direction allowing for free tearing using a smooth straight edge blade.
patent application WO 01/38425 A2 by Trespaphan GmbH describes a biaxially oriented multilayer film made of resins such as polyolefins, polyamide, polyester or PVC with natural or mineral fibers in at least one layer.

In theory, a mineral paper does not need to include a polymer matrix.

US Patent 9,200,411 B2 assigned to New Millenium LLC describes a process for manufacturing mineral paper with a density of 0.5 g/cc compared to 0.7 to 0.9 g/cc of a paper based on cellulosic pulp, by extrusion in the processing range of 149°C to 221°C of pellets formed from a mixture of 50% to 70% of milled rocks of 0.05 to 0.08 mm in diameter, 30% to 50% of Sodium Silicate solution and 2% to 5 % of additives, including vitamins.

The document DE2710996 A1 describes a paper containing mineral fibers, wool fibers, a binder and a resin with carboxylic groups. This paper is used as a filter material to manufacture protective clothing.

The document CN101851365 describes a mineral paper comprising polyethylene, hot-melt adhesive, titanium dioxide, calcium carbonate, a silane coupling agent, stearic acid, an epoxy plasticizer and polyethylene wax.

The document CN102910859 describes a method of manufacturing a mineral paper comprising CaO which, through a series of steps, is converted into a low-density calcium carbonate which results in a mineral paper.

The document GB1127973 describes a polymeric paper comprising a polymer other than PET and solid matter.

### OBJECTIVES OF THE INVENTION

It is an object of the present invention to provide a synthetic mineral paper.

It is another object of the present invention to provide a method to manufacture the synthetic mineral paper.

### DESCRIPTION OF THE FIGURES

Figure 1 illustrates a block diagram of the manufacturing process of the present invention.
Figure 2 illustrates another block diagram of a further embodiment of the manufacturing process of the present invention.

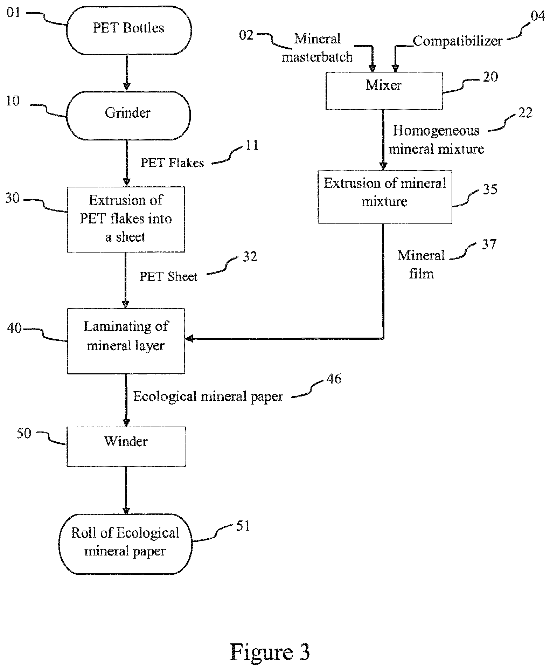

Figure 3 illustrates a further embodiment of the manufacturing process of the present invention.
Figure 4 refers to still another further embodiment of the manufacturing process of the present invention.
Figure 5 shows another further embodiment of the manufacturing process of the present invention.
Figure 6 illustrates another further embodiment of the manufacturing process of the present invention.
Figure 7 refers to another further embodiment of the manufacturing process of the present invention.
Figure 8 represents another manufacturing embodiment of the production process of the present invention.

### DETAILED DESCRIPTION OF THE INVENTION

The present invention relates to an environmentally friendly synthetic mineral paper by using recycled plastics, but it is not limited to residues of PET bottles, the paper further comprises naturally available minerals.

Processes for producing synthetic paper are also contemplated.

The synthetic paper of the present invention provides as technical advantages, moisture impermeability, foldability, tear resistance, scratch resistance, anti-fungal and antimicrobial characteristics, chemical and grease resistance, high temperature resistance above 200 °C, degradability. It also allows printing on its surface with any type of printer, e.g. laser, offset or digital printer, and can be adapted for use in packaging, labels, signs or maps as a substitute for conventional cellulosic paper.

In one embodiment of the present invention, the composition of ecological mineral paper consists of:
1. 33% to 78% Polymeric matrix, mainly PET bottle wastes (soft drinks, water, juices etc.),
2. 20% to 60% Natural mineral, mainly calcium carbonate, CaCO₃,
3. 1% to 2% Dispersion agent, mainly polymeric, such as SOLPLUS, and
4. 1% to 5% Compatibilizer, especially with mineral masterbatch in PE,

The polymer matrix is not limited only to recycled PET and it includes recycled non-foamed PE or PP products.

In the same manner, the mineral is not limited to CaCO₃ and includes talc, mica, marble, TiO₂, etc.

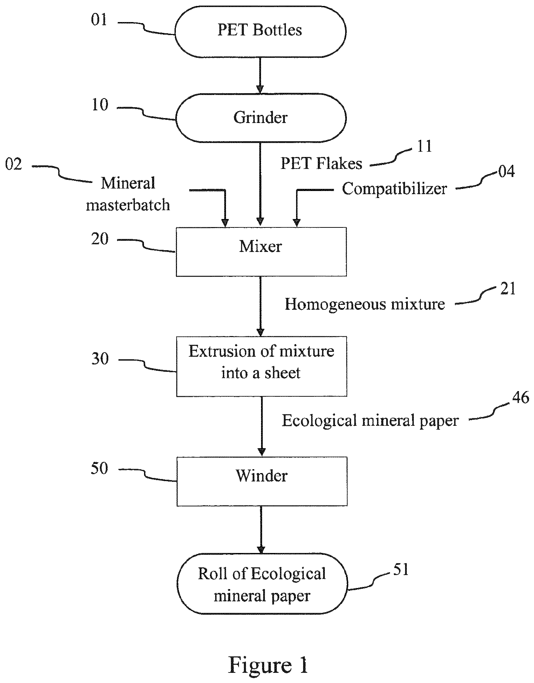

In a preferred embodiment of Figure 1, the process of the present invention comprises grinding the PET bottle wastes ***01*** in a grinder ***10*** to obtain PET flakes ***11***, which are mixed with the concentrated mineral masterbatch ***02*** such as calcium carbonate or talc or mica in a polymer matrix such as PE, with an appropriate compatibilizer ***04*** in predetermined proportions, using a mechanical mixing device ***20*** for a predetermined period of time that will ensure a homogeneous mixture ***21*.** The obtained homogeneous mixture ***21*** is extruded into an ecological mineral paper ***46*** of a desired thickness using a sheet extrusion system ***30,*** which is then wound into a roll using a winder ***50*** to produce a roll of ecological mineral paper ***51*.**

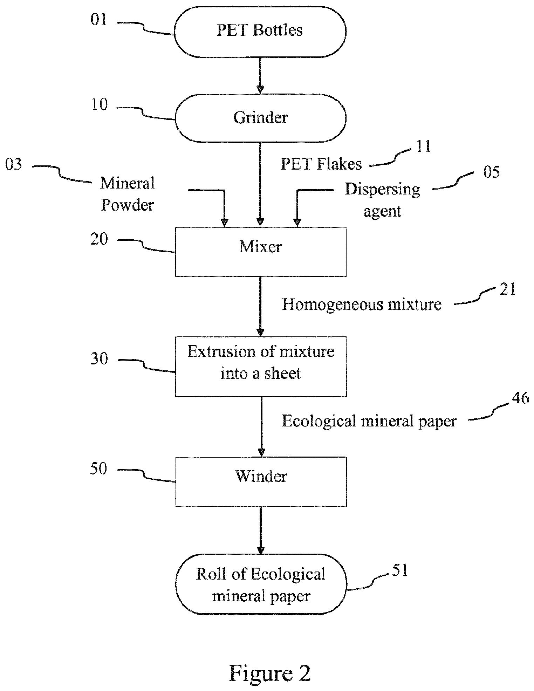

In another alternative embodiment of the present invention. Figure 2, the process comprises grinding the PET bottle wastes ***01*** in a grinder ***10*** to obtain PET flakes ***11***, which are mixed with mineral powder ***03*** such as calcium carbonate or talc or mica, with a dispersion agent ***05*** in predetermined proportions, using a mechanical mixing device ***20*** for a predetermined period of time that will ensure a homogeneous mixture. The obtained homogeneous mixture ***21*** is extruded into an ecological mineral paper ***46*** of a desired thickness using a sheet extrusion system ***30**,* which is wound into a roll using a winder ***50*** to produce an ecological mineral paper roll ***51.***

Unlike these options of premixing the components, an alternative embodiment of the process comprises:
i. grinding the PET bottle wastes ***01*** in a grinder ***10*** to obtain PET flakes ***11***, which are extruded into a PET sheet 32 of a desired thickness using a sheet extrusion system 30. The concentrated masterbatch ***02*** of minerals such as carbonate of calcium or talc or mica is mixed separately in a polymer matrix such as PE, with an appropriate compatibilizer ***04*** in predetermined proportions, using a mechanical mixing device ***20*** for a predetermined period of time that will ensure a homogeneous mixture. The obtained homogeneous mineral mixture ***22*** is extruded into a mineral film ***37*** of a width identical to that of the PET sheet 32 using another flat film extrusion system 35, which is then laminated on both sides of the PET sheet 32 using a laminating device ***40*** to form an ecological mineral paper ***46*,** which is then wound into a roll using a winder ***50*** to produce an ecological mineral paper roll ***51*.**

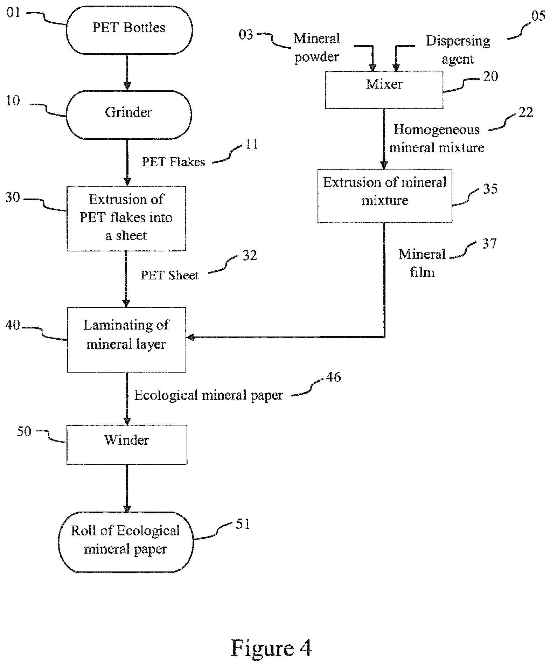

Another possible alternative is as shown in Figure 4, which is described as follows:
ii. grinding the PET bottle wastes ***01*** in a grinder ***10*** to obtain PET flakes ***11*** that are then extruded into a PET sheet ***32*** of a desired thickness using a sheet extrusion system ***30*.** The mineral powder 03 such as calcium carbonate or talc or mica is mixed separately with a dispersing agent ***05*** in predetermined proportions, using a mechanical mixing device ***20*** for a predetermined period of time that will ensure a homogeneous mixture. The obtained homogeneous mineral mixture ***22*** is extruded into a mineral film ***37*** of a width identical to that of the PET sheet ***32*** using another flat film extrusion system ***35***, which is laminated on both sides of the PET sheet ***32*** using a laminating device ***40*** to form an ecological mineral paper ***46*** which is wound into a roll using a winder ***50*** to produce a roll of organic mineral paper ***51*.**

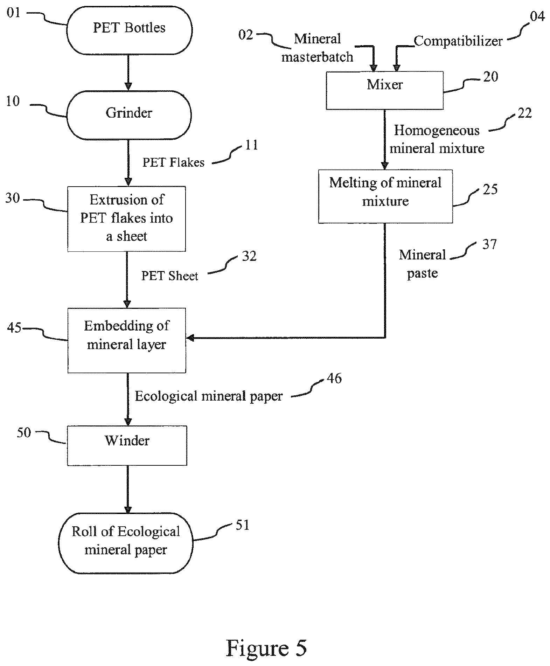

Additionally, another alternative embodiment of the process comprises (Figure 5):
iii. grinding the PET bottle wastes ***01*** in a grinder ***10*** to obtain PET flakes ***11***, which are then extruded into a PET sheet ***32*** of a desired thickness using a sheet extrusion system ***30.*** The concentrated mineral masterbatch ***02*** is mixed separately in a polymer matrix such as PE, with an appropriate compatibilizer ***04*** in predetermined proportions, using a mechanical mixing device ***20*** for a predetermined period of time that will ensure a homogeneous mixture. The obtained homogeneous mineral mixture ***22*** is melted in a melting device ***25*** to produce a mineral paste ***38***, which is then embedded in both sides of the PET sheet ***32*** using a coating device ***45*** to form an ecological mineral paper ***46*** that is wound into a roll using a winder ***50*** to produce a roll of ecological mineral paper ***51*.**

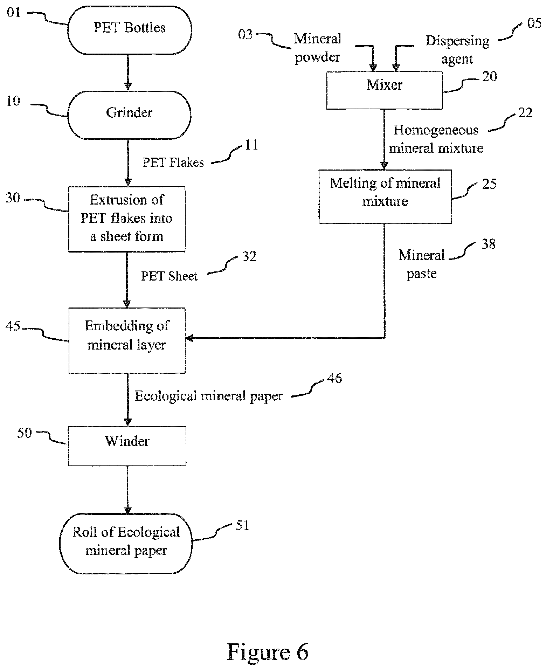

Figure 6 shows another embodiment of the process to obtain an ecological mineral paper:
iv. grinding the PET bottle wastes ***01*** in a grinder ***10*** to obtain PET flakes ***11***, which are then extruded into a PET sheet ***32*** of a desired thickness using a sheet extrusion system ***30.*** The mineral powder a ***03*** is mixed separately with a dispersing agent ***05*** in predetermined proportions, using a mechanical mixing device ***20*** for a predetermined period of time that will ensure a homogeneous mixture. The obtained homogeneous mineral mixture ***22*** is melted in a melting device ***25*** to produce a mineral paste ***38***, which is embedded in both sides of the PET sheet ***32*** using a coating device ***45*** to form an ecological mineral paper ***46*** that is wound into a roll using a winder ***50*** to produce a roll of ecological mineral paper ***51*.**

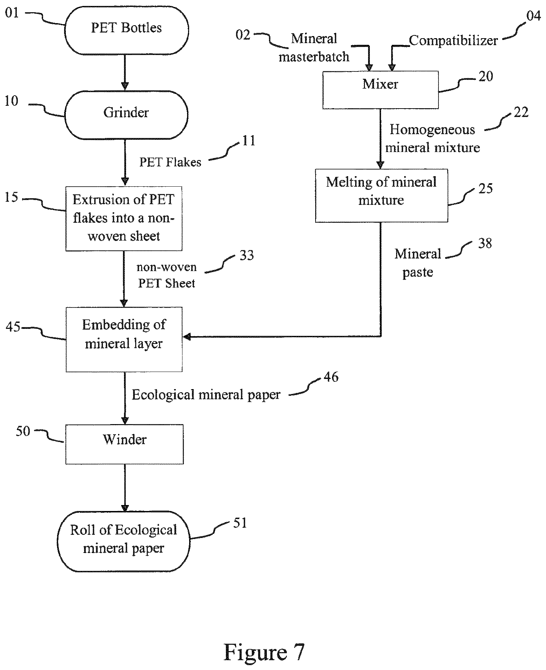

In addition, another alternative embodiment of the process (Figure 7) comprises:
v. grinding the PET bottle wastes ***01*** in a grinder ***10*** to obtain PET flakes ***11***, which are extruded into a non-woven PET sheet ***33*** of a desired thickness using a non-woven sheet extrusion system ***15*.** The concentrated mineral masterbatch ***02*** is mixed separately in a polymer matrix such as PE, with an appropriate compatibilizer ***04*** in predetermined proportions, using a mechanical mixing device ***20*** for a predetermined period of time that will ensure a homogeneous mixture. The obtained homogeneous mineral mixture ***22*** is melted in a melting device ***25*** to produce a mineral paste ***38***, which is applied as a coating on both sides of the non-woven PET sheet ***33*** using a coating device ***45*** to form an ecological mineral paper ***46*** that is wound into a roll using a winder ***50*** to produce a roll of ecological mineral paper ***51*.**

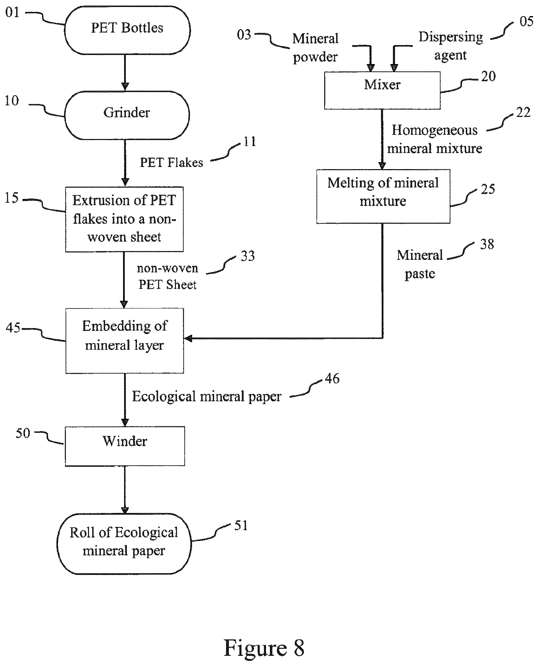

Another manufacturing alternative is shown in Figure 8, and it is described as follows:
vi. grinding the PET bottle wastes ***01*** in a grinder ***10*** to obtain PET flakes ***11***, which are extruded into a non-woven PET sheet ***33*** of a desired thickness using a non-woven sheet extrusion system ***15*.** The mineral powder ***03*** is mixed separately with a dispersing agent ***05*** in predetermined proportions, using a mechanical mixing device ***20*** for a predetermined period of time that will ensure a homogeneous mixture. The obtained homogeneous mineral mixture ***22*** is melted in a melting device ***25*** to obtain a mineral paste ***38***, which is applied as a coating on both sides of the non-woven PET sheet ***33*** using a coating device ***45*** to form an ecological mineral paper ***46*** that is wound into a roll using a winder ***50*** to produce a roll of ecological mineral paper ***51*.**

In each of these embodiments, the shape of the product is not limited to only sheet forms, but it includes films produced by blow extrusion that are cut into a flat shape.

## Claims

1. A synthetic mineral paper, **characterized in that** it comprises:
(1) 33% to 78% polymeric matrix, mainly PET bottle wastes (soft drinks, water, juices etc.),
(2) 20 % to 60 % natural mineral, mainly calcium carbonate, CaCO₃,
(3). 1% to 2% dispersion agent, mainly polymeric such as SOLPLUS, and
(4) 1% to 5% compatibilizer, especially with mineral masterbatch in PE,.

2. The synthetic mineral paper according to claim 1, further **characterized in that** the polymer matrix is not limited to only recycled PET and includes recycled non-foamed PE or PP products.

3. The synthetic mineral paper according to claim 1, further **characterized in that** the mineral is not limited to CaCO₃ and includes talc, mica, marble, TiO₂.

4. A process of manufacturing a synthetic mineral paper of claim 1, **characterized in that** it comprises:
grinding the PET bottle wastes ***(01)*** in a grinder ***(10)*** to obtain PET flakes ***(11)*** that are mixed with a concentrated masterbatch ***(02)*** of minerals such as calcium carbonate or talc or mica in a polymer matrix such as PE, with an appropriate compatibilizer ***(04)*** in predetermined proportions, using a mechanical mixing device ***(20)*** for a predetermined period of time that will ensure a homogeneous mixture ***(21)***;
the obtained homogeneous mixture ***(21)*** is extruded into an ecological mineral paper ***(46)*** of a desired thickness using a sheet extrusion system **(*30*),** which is wound into a roll with a winder ***(50)*** to produce an ecological mineral paper roll ***(51).***

5. A process of manufacturing a synthetic mineral paper of claim 1, **characterized in that** it comprises:
grinding the PET bottle wastes ***(01)*** in a grinder ***(10)*** to obtain PET flakes ***(11)*** that are mixed with mineral powder ***(03)*** such as calcium carbonate or talc or mica, with a dispersion agent ***(05)*** in predetermined proportions, using a mechanical mixing device ***(20)*** for a predetermined period of time that will ensure a homogeneous mixture; the obtained homogeneous mixture ***(21)*** is extruded into an ecological mineral paper ***(46)*** of a desired thickness using a sheet extrusion system ***(30),*** which is wound into a roll using a winder ***(50)*** to produce an ecological mineral paper roll ***(51).***

6. A process of manufacturing a synthetic mineral paper of claim 1, **characterized in that** it comprises:
i. grinding the PET bottle wastes ***(01)*** in a grinder ***(10)*** to obtain PET flakes ***(11)*** that are extruded into a PET sheet (32) of a desired thickness using a sheet extrusion system (30); the concentrated masterbatch ***(02)*** of minerals such as calcium carbonate or talc or mica is mixed separately in a polymer matrix such as PE, with an appropriate compatibilizer ***(04)*** in predetermined proportions, using a mechanical mixing device ***(20)*** for a predetermined period of time that will ensure a homogeneous mixture; the obtained homogeneous mineral mixture ***(22)*** is extruded into a mineral film (37) of a width identical to that of the PET sheet (32) using another flat film extrusion system (35), which is then laminated onto both sides of the PET sheet (32) using a laminating device (40) to form an ecological mineral paper ***(46)**,* which is wound into a roll using a winder ***(50)*** to produce an ecological mineral paper roll ***(51)***;
ii. grinding the PET bottle wastes ***(01)*** in a grinder ***(10)*** to obtain PET flakes ***(11)*** that are extruded into a PET sheet ***(32)*** of a desired thickness using a sheet extrusion system ***(30):*** the mineral powder (03) such as calcium carbonate or talc or mica is mixed separately with a dispersing agent ***(05)*** in predetermined proportions, using a mechanical mixing device ***(20)*** for a predetermined period of time that will ensure a homogeneous mixture; the obtained homogeneous mineral mixture ***(22)*** is extruded into a mineral film ***(37)*** of a width identical to that of the PET sheet ***(32)*** using another flat film extrusion system ***(35)*,** which is laminated on both sides of the PET sheet ***(32)*** using a laminating device ***(40)*** to form an ecological mineral paper ***(46)*** which is wound into a roll using a winder ***(50)*** to produce a roll of organic mineral paper ***(51).***

7. A process of manufacturing a synthetic mineral paper of claim 1, **characterized in that** it comprises:
i. grinding the PET bottle wastes ***(01)*** in a grinder ***(10)*** to obtain PET flakes ***(11)*** which is extruded into a PET sheet ***(32)*** of a desired thickness using a sheet extrusion system ***(30)**;* the concentrated mineral masterbatch ***(02)*** is mixed separately in a polymer matrix such as PE, with an appropriate compatibilizer ***(04)*** in predetermined proportions, using a mechanical mixing device ***(20)*** for a predetermined period of time that will ensure a homogeneous mixture; the obtained homogeneous mineral mixture ***(22)*** is melted in a melting device ***(25)*** to obtain a mineral paste ***(38)*,** which is then embedded in both sides of the PET sheet ***(32)*** using a coating device ***(45)*** to form an ecological mineral paper ***(46)*** that is wound into a roll using a winder ***(50)*** to produce a roll of ecological mineral paper ***(51).***
ii. grinding PET bottle wastes ***(01)*** in a grinder ***(10)*** to obtain PET flakes ***(11)*** that are extruded into a PET sheet ***(32)*** of a desired thickness using a sheet extrusion system ***(30)***; the mineral powder (03) is mixed separately with a dispersing agent ***(05)*** in predetermined proportions, using a mechanical mixing device ***(20)*** for a predetermined period of time that will ensure a homogeneous mixture; the obtained homogeneous mineral mixture ***(22)*** is melted in a melting device ***(25)*** to obtain a mineral paste ***(38)***, which is then embedded in both sides of the PET sheet ***(32)*** using a coating device ***(45)*** to form an ecological mineral paper ***(46)*** that is wound into a roll using a winder ***(50)*** to produce a roll of ecological mineral paper ***(51).***

8. A process of manufacturing a synthetic mineral paper of claim 1, **characterized in that** it comprises:
i. grinding the PET bottle wastes ***(01)*** in a grinder ***(10)*** to obtain PET flakes ***(11)***, which are extruded into a non-woven PET sheet ***(33)*** of a desired thickness using a non-woven sheet extrusion system ***(15)***; the concentrated mineral masterbatch ***(02)*** is mixed separately in a polymer matrix such as PE, with an appropriate compatibilizer ***(04)*** in predetermined proportions, using a mechanical mixing device ***(20)*** for a predetermined period of time that will ensure a homogeneous mixture; the obtained homogeneous mineral mixture ***(22)*** is melted in a melting device ***(25)*** to obtain a mineral paste ***(38)***, which is applied as a coating on both sides of the non-woven PET sheet ***(33)*** using a coating device ***(45)*** to form an ecological mineral paper ***(46)*** that is wound into a roll using a winder ***(50)*** to produce a roll of ecological mineral paper ***(51)**;*
ii. grinding the PET bottle wastes ***(01)*** in a grinder ***(10)*** to obtain PET flakes ***(11),*** which are extruded into a non-woven PET sheet ***(33)*** of a desired thickness using a non-woven sheet extrusion system ***(15)*;** the mineral powder ***(03)*** is mixed separately with a dispersing agent ***(05)*** in predetermined proportions, using a mechanical mixing device ***(20)*** for a predetermined period of time that will ensure a homogeneous mixture; the obtained homogeneous mineral mixture ***(22)*** is melted in a melting device ***(25)*** to obtain a mineral paste ***(38),*** which is applied as a coating on both sides of the non-woven PET sheet ***(33)*** using a coating device ***(45)*** to form an ecological mineral paper ***(46)*** that is wound into a roll using a winder ***(50)*** to produce a roll of ecological mineral paper ***(51).***

9. The synthetic mineral paper according to claim 1, further **characterized in that** it is produced in the form of sheets or a flat film.

## Amended claims

### Amended claims under Art. 19.1 PCT

1. A synthetic mineral paper, **characterized by** comprising:
a homogeneous mixture (21) including:
(1) a polymer matrix formed from ground polyethylene terephthalate (PET) flakes (11) in an amount of 33% to 78%;
(2) a concentrated natural mineral masterbatch (02), in particular calcium carbonate (CaCO₃), talc, or mica, in a polyethylene (PE) polymer matrix, in an amount of 20% to 60%; and
(3) a compatibilizer (04), in an amount of 1% to 5%;
wherein the homogeneous mixture (21) is extruded into a sheet shape forming a mineral paper (46), and wherein the mineral paper (46) is wound into a roll of mineral paper (51);

2. A process of manufacturing a synthetic mineral paper of claim 1, **characterized by** comprising:
grinding polyethylene terephthalate (PET) wastes (01) in a grinder (10) to obtain ground PET flakes (11);
mixing the ground PET flakes (11) in an amount of 33% to 78% with a concentrated natural mineral masterbatch (02), in particular calcium carbonate (CaCO₃), talc, or mica, in a polyethylene (PE) polymer matrix in an amount of 20% to 60%, and a a compatibilizer (04), in an amount of 1% to 5%, using a mechanical mixing device (20) for a predetermined period until forming a homogeneous mixture (21);
extruding the obtained homogeneous mixture (21) to form a mineral paper (46) of a desired thickness using a sheet extrusion system (30); and
winding the mineral paper (46) using a winder (50) to produce a roll of mineral paper (51).

3. A synthetic mineral paper, **characterized by** comprising:
a homogeneous mixture (21) including:
(1) a polymer matrix formed from ground polyethylene terephthalate (PET) flakes (11) in an amount of 33% to 78%;
(2) a mineral powder (03), in particular of calcium carbonate (CaCO₃), talc, or mica, in an amount of 20% to 60%; and
(3) a dispersing agent (05), in particular SOLPLUS, in an amount of 1% to 2%;
wherein the homogeneous mixture (21) is extruded into a sheet shape forming a mineral paper (46), and wherein the mineral paper (46) is wound into a roll of mineral paper (51);

4. A process of manufacturing a synthetic mineral paper of claim 3, **characterized by** comprising:
grinding polyethylene terephthalate (PET) wastes (01) in a grinder (10) in an amount of 33% to 78%, to obtain ground PET flakes (11);
mixing the ground PET flakes (11) in an amount of 33% to 78% with a mineral powder (03), in particular of calcium carbonate (CaCO₃), talc, or mica, in an amount of 20% to 60%, and with a dispersing agent (05), in particular SOLPLUS, in an amount of 1% to 2%, using a mechanical mixing device (20) for a predetermined period until forming a homogeneous mixture (21);
extruding the homogeneous mixture (21) to form a mineral paper (46) of a desired thickness using a sheet extrusion system (30); and winding the mineral paper (46) using a winder (50) to produce a mineral paper roll (51).

5. A synthetic mineral paper, **characterized by** comprising:
an extruded sheet (32) formed from ground polyethylene terephthalate (PET) flakes (11), and
an extruded mineral film (37) formed from a homogeneous mineral mixture (22) of a concentrated mineral masterbatch (02), in particular calcium carbonate (CaCO₃), talc, or mica, in a polyethylene (PE) polymer matrix, and a compatibilizer (04);
wherein the extruded sheet (32) and the extruded mineral film (37) are laminated together to form a mineral paper (46) and wound into a mineral paper roll (51).

6. A process of manufacturing a synthetic mineral paper of claim 5, **characterized by** comprising:
grinding polyethylene terephthalate (PET) wastes (01) in a grinder (10) to obtain ground PET flakes (11),
extruding the ground PET flakes (11) to form an extruded PET sheet (32) of a desired thickness using a sheet extrusion system (30);
mixing separately a concentrated mineral masterbatch (02), in particular calcium carbonate (CaCO₃), talc, or mica, in a polyethylene (PE) polymer matrix, and a compatibilizer (04) using a mechanical mixing device (20) for a predetermined period until forming a homogeneous mixture (22);
extruding the homogeneous mixture (22) to form an extruded mineral film (37) of a thickness identical to the thickness of the extruded PET sheet (32) using a flat film extrusion system (35);
laminating both sides of the extruded PET sheet (32) with a mineral film (37) by means of a laminating device (40) to form a mineral paper (46); and
winding the mineral paper (46) using a winder (50) to produce a mineral paper roll (51).

7. A synthetic mineral paper, **characterized by** comprising:
an extruded sheet (32) formed from ground polyethylene terephthalate (PET) flakes (11), and
an extruded mineral film (37) formed from a homogeneous mixture (22) of a mineral powder (03), in particular calcium carbonate (CaCO₃), talc, or mica, and a dispersing agent (05), in particular SOLPLUS;
wherein the extruded sheet (32) and the extruded mineral film (37) are laminated together to form a mineral paper (46) and wound into a mineral paper roll (51).

8. A process of manufacturing a synthetic mineral paper of claim 7, **characterized by** comprising:
grinding polyethylene terephthalate (PET) wastes (01) in a grinder (10) to obtain ground PET flakes (11),
extruding the ground PET flakes (11) to form an extruded PET sheet (32) of a desired thickness using a sheet extrusion system (30);
mixing separately a mineral powder (03), in particular calcium carbonate (CaCO₃), talc, or mica, and a dispersing agent (05), in particular SOLPLUS, using a mechanical mixing device (20) for a predetermined period until forming a homogeneous mixture (22);
extruding the homogeneous mixture (22) to form a mineral film (37) of a thickness identical to the thickness of the extruded PET sheet (32) using a flat film extrusion system (35);
laminating both sides of the extruded PET sheet (32) with a mineral film (37) using a laminating device (40) to form a mineral paper (46);
winding the mineral paper (46) using a winder (50) to produce a roll of mineral paper (51).

9. A synthetic mineral paper, **characterized by** comprising:
an extruded sheet (32) formed from ground polyethylene terephthalate (PET) flakes (11), and
a melted mineral paste (38) formed from a homogeneous mixture (22) of a concentrated mineral masterbatch (02), in particular calcium carbonate (CaCO₃), talc, or mica, in a polyethylene (PE) polymer matrix, and a compatibilizer (04);
wherein the melted mineral paste (38) is embedded in both sides of the extruded sheet (32) to form a mineral paper (46), which is wound into a roll of mineral paper (51).

10. A process of manufacturing a synthetic mineral paper of claim 9, **characterized by** comprising:
grinding polyethylene terephthalate (PET) wastes in a grinder (10) to obtain ground PET flakes (11),
extruding the ground PET flakes (11) to form an extruded PET sheet (32) of a desired thickness using a sheet extrusion system (30);
mixing separately a concentrated mineral masterbatch (02), in particular calcium carbonate (CaCO₃), talc, or mica, in a polyethylene (PE) polymer matrix, and a compatibilizer (04) using a mechanical mixing device (20) for a predetermined period until forming a homogeneous mineral mixture (22);
melting the homogeneous mineral mixture (22) in a melting device (25) to obtain a mineral paste (38);
embedding the mineral paste (38) in both sides of the extruded PET sheet (32) by means of a coating device (45) to form a mineral paper (46);
winding the mineral paper (46) by using a winder (50) to produce a roll of ecological mineral paper (51).

11. A synthetic mineral paper, **characterized by** comprising:
an extruded sheet (32) formed from ground polyethylene terephthalate (PET) flakes (11), and
a melted mineral paste (38) formed from a homogeneous mineral mixture (22) of mineral powder (03), in particular calcium carbonate (CaCO₃), talc, or mica, and a dispersing agent (05), in particular SOLPLUS;
wherein the melted mineral paste (38) is embedded in both sides of the extruded sheet (32) to form a mineral paper (46), which is wound into a roll of mineral paper (51).

12. A process of manufacturing a synthetic mineral paper of claim 11, **characterized by** comprising:
grinding polyethylene terephthalate (PET) wastes in a grinder (10) to obtain ground PET flakes (11);
extruding the ground PET flakes (11) to form an extruded PET sheet (32) of a desired thickness using a sheet extrusion system (30);
mixing separately mineral powder (03), in particular calcium carbonate (CaCO₃), talc, or mica, and a dispersing agent (05), in particular SOLPLUS, using a mechanical mixing device (20) for a predetermined period until forming a homogeneous mineral mixture (22);
melting the homogeneous mineral mixture (22) in a melting device (25) to obtain a mineral paste (38);
embedding the mineral paste (38) in both sides of the extruded PET sheet (32) by means of a coating device (45) to form a mineral paper (46);
winding the mineral paper (46) using a winder (50) to produce a mineral paper roll (51).

13. A synthetic mineral paper, **characterized by** comprising:
an extruded non-woven sheet (33) formed from ground polyethylene terephthalate (PET) flakes (11), and
a melted mineral paste (38) formed from a homogeneous mixture of a concentrated mineral masterbatch (02), in particular calcium carbonate (CaCO₃), talc, or mica, in a polyethylene (PE) polymer matrix, and a compatibilizer (04);
wherein the melted mineral paste (38) is embedded in both sides of the extruded non-woven sheet (33) to form a mineral paper (46), which is wound into a roll of mineral paper (51).

14. A process of manufacturing a synthetic mineral paper of claim 13, **characterized by** comprising:
grinding polyethylene terephthalate (PET) wastes in a grinder (10) to obtain ground PET flakes (11),
extruding the ground PET flakes (11) to form an extruded non-woven PET sheet (33) of a desired thickness using a non-woven sheet extrusion system (15);
mixing separately a concentrated mineral masterbatch (02), in particular calcium carbonate (CaCO₃), talc, or mica, in a
polyethylene (PE) polymer matrix, and a compatibilizer (04) using a mechanical mixing device (20) for a predetermined period until forming a homogeneous mineral mixture (22);
melting the homogeneous mineral mixture (22) in a melting device (25) to obtain a mineral paste (38);
applying the mineral paste (38) as a coating on both sides of the extruded non-woven PET sheet (33) by means of a coating device (45) to form a mineral paper (46);
winding the mineral paper (46) using a winder (50) to produce a roll of mineral paper (51).

15. A synthetic mineral paper, **characterized by** comprising:
an extruded non-woven sheet (33) formed from ground polyethylene terephthalate (PET) flakes (11), and
a melted mineral paste (38) formed from a homogeneous mixture (22) of mineral powder (03), in particular of calcium carbonate (CaCO₃), talc, or mica, and a dispersing agent (05), in particular SOLPLUS;
wherein the melted mineral paste (38) is applied as a coating on both sides of the extruded non-woven sheet (33) to form a mineral paper (46), which is wound into a roll of mineral paper (51).

16. A process of manufacturing a synthetic mineral paper of claim 15, **characterized by** comprising:
grinding polyethylene terephthalate (PET) wastes in a grinder (10) to obtain ground PET flakes (11),
extruding the ground PET flakes (11) to form an extruded non-woven PET sheet (33) of a desired thickness using a non-woven sheet extrusion system (15);
mixing separately mineral powder (03), in particular calcium carbonate (CaCO₃), talc, or mica, and a dispersing agent (05), in particular SOLPLUS, using a mechanical mixing device (20) for a predetermined period until forming a homogeneous mineral mixture (22);
melting the homogeneous mineral mixture (22) in a melting device (25) to obtain a mineral paste (38);
applying the mineral paste (38) as a coating on both sides of the extruded non-woven PET sheet (33) by means of a coating device (45) to form a mineral paper (46);
winding the mineral paper (46) using a winder (50) to produce a roll of mineral paper (51).
